# EUROPEAN PATENT APPLICATION

(11) **EP 1 724 859 A1**
(43) Date of publication of application: **22.11.2006**
(21) Application number: 05015796.5
(22) Date of filing: 20.07.2005
(51) Int. Cl.: H01M 4/24, H01M 6/26, H01M 10/42

(54) **Self-rechargeable alkaline battery**

(30) Priority: 16.05.2005 KR 2005040732
(71) Applicant: Pico Science Corporation, Tennouji-ku Osaka-shi (JP)
(72) Inventor: Nobuyuki, Obata, Shanda-shi Hyogo-ken (JP); Hideo, Ueno, YougenGaishia Kankyou, Itamishi Hyogo-ken (JP)
(74) Representative: Körfer, Thomas

(57) **Abstract**

Disclosed herein is a self-rechargeable alkaline battery. The battery comprises a cathode e.g zinc or aluminum or magnesium and an anode, at least one of which is constructed of a metallic plate which can be made of copper, an electrode receptor equipped to the cathode, an electrode donor equipped to the anode, a separator provided between the electrode donor and the electrode receptor, an electrolyte comprising an aqueous potassium hydroxide solution and an aqueous sodium hydroxide solution and having at least one powdered material selected from the group consisting of aluminum oxide, manganese oxide, and silicon oxide. The battery has a self-rechargeable ability, stable output characteristics, and a remarkably increased life span.

## Description

This application claims the benefit of Korean Patent Application No. P2005-0040732, filed on MAY 16, 2005, which is hereby incorporated by reference as if fully set forth herein.

### BACKGROUND OF THE INVENTION

### Field of the Invention

The present invention relates to a self-rechargeable alkaline battery, designed to allow an anode active material oxidized by an anode reaction to be reduced within an electrolyte so as to recycle the anode active material, thereby having an increased life span.

### Discussion of the Related Art

The Daniel cell is generally given by the following representation.

Zn|ZnSO₄(aq)||CuSO₄(aq)|Cu

The Daniel cell uses a copper or carbon bar for a cathode, and zinc for an anode in the media of an electrolyte, and is constructed such that ions are generated by oxidation and reduction in the electrodes, and these ions flow from one electrode to the other electrode through the electrolyte to supply power to an outer load. Generally, the Daniel cell suffers from a rapid decrease in electromotive force when the chemical reaction is finished, and it is difficult to recycle an oxidized anode active material. Thus, it is necessary for a primary battery to replace the battery itself with a new one. Meanwhile, it is necessary for various secondary batteries to be recharged after being discharged to a predetermined level.

Thus, as a battery which does not require recharging, a self-rechargeable battery is suggested in the Japanese Battery Handbook, third edition, pp. 8 - 11 (published by Marugen), which uses oxygen for a cathode active material and a fuel for an anode active material, and generates electric energy by electrochemically oxidizing the fuel. The self-rechargeable battery of the disclosure is constructed such that the active materials for the battery are supplied from the outside into the battery in order to generate electricity, and discharged active materials depleted in activeness are extracted to the outside from the battery. However, the self-rechargeable battery of the disclosure has problems in that the active materials must be continuously supplied from the outside into the battery, and in that the active materials must be removed from the battery after its activity has been depleted.

### SUMMARY OF THE INVENTION

Accordingly, the present invention is directed to a self-rechargeable alkaline battery that substantially obviates one or more problems due to limitations and disadvantages of the related art.

An object of the present invention is to provide a self-rechargeable alkaline battery with an extended life span, which allows oxidized anode active materials to be reduced and to be self-recharged within an electrolyte without requiring supply of the active material from the outside or extraction of the discharged active materials depleted in the activeness to the outside as well as recharge of the battery, thereby enabling the electromotive force of the battery to be maintained.

In order to achieve the above object, the inventors found that, in an alkaline battery using an alkali metal hydroxide as an electrolyte, if metallic ions, hydroxides, or oxides generated by oxidation and reduction in an anode can be reduced and self-recharged within an electrolyte, it is possible to maintain the chemical reaction in the battery by virtue of circulation of the oxidation and the reduction within the electrolyte.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a self rechargeable alkaline battery is provided, comprising: a cathode; an anode having an anode active material comprising metal selected from the group consisting of aluminum, zinc and magnesium; a separator formed between the cathode and the anode; and an electrolyte comprising one of alkali metal, alkaline earth metal and alkaline earth metal hydroxides, and having an oxidizing agent and a reducing agent dispersed therein, wherein an oxidized anode active material is reduced within the electrolyte.

In particular, when the two electrodes are connected through the electrolyte which comprises the oxidizing agent and the reducing agent provided as a cathode active material and an anode active material, respectively, the reduction occurs at the cathode and the oxidation occurs at the anode, so that electrons flow from the anode to the cathode, and thus current flows from the cathode to the anode. Accordingly, the electrolyte of the invention comprises the oxidizing agent and the reducing agent, and the electrolyte having a self-recharging capability comprises at least one selected from the group consisting of aluminum oxide, manganese oxide, and silicon oxide, and preferably, further comprises at least one selected from the group consisting of cobalt chloride and barium chloride. The combination of these materials accelerates the reduction of the oxidized anode active material.

According to the invention, the anode where the oxidation, that is, the electron discharging reaction, occurs is equipped with an electron donor, and the cathode where the reduction, that is, the electron receiving reaction, occurs is equipped with an electron acceptor, thereby increasing an ability of supplying the electrons.

The electron donor and the electron acceptor may be manufactured by doping an electrode catalyst for accelerating the electrode reaction to a carbon material or a conductive polymeric material through thermal diffusion. The electrode catalyst may include the rare earth metal, rare earth metal oxides, cobalt-based oxides, and platinum-based materials. In particular, the electrode catalyst preferably includes zirconium oxide (ZrO₂) and zirconium silicates (ZrSiO₄), which are typically used at the same time.

More preferably, doping to the carbon material is performed at the same time with thermal gas carburization of nano carbon, and a hybrid of carbon which is an organic material, and a zirconium-based material of the rare earth metal and/or the cobalt-based material which is an inorganic material, is preferable.

The electrolyte may be in a liquid state or in a gel state of semi-solid, and the separator may be constructed of a material selected from polyethylene, polypyrrole and polyolefin.

Here, when carbon is adsorbed into the surface of an electrode plate of the cathode or the anode by thermal gas carburization and the like, and carbon is then integrated to the surface structure of the electrode plate (particularly, a copper plate of the cathode), the surface area of the electrode plate is substantially increased due to carbon adsorbed in a three-dimensional shape to the surface of the electrode plate, thereby remarkably increasing charge holding capabilities.

Accordingly, since the charge holding capability can be increased as described above, it is possible to avoid an adverse influence of lowering the electric properties due to impurities created when a carbon material is attached to the electrode plate with a binder as with the prior art and to enhance an output voltage of the battery.

In order to accelerate the electrode reaction on the surface of the electrodes, it is desirable to form a layer on the surface of the electrodes by doping carbon such as nano carbon to zeolite.

Thermal gas carburization is performed to diffuse carbon into the electrode plate using at least one carbon containing gas selected from carbon dioxide (CO₂), acetylene (C₂H₂), butane (C₄H₁₀) and ethanol (C₂H₅OH). Here, when thermal gas carburization is performed using butane and/or ethanol, the electrode plate can have an extended life span. Alternatively, when thermal gas carburization is performed using carbon dioxide and/or acetylene, the battery can provide a higher output voltage.

Additionally, a large-area charge layer necessary for the electrode may be formed in such a manner of heating the electrode plate which is a metallic plate to the melting point or more of the electrode plate, and compressing carbon materials serving as the charge donor into both sides of the electrode plate using thermally resistant ceramic materials.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram illustrating the structure of a battery in accordance with one embodiment of the present invention;

FIG. 2 is a diagram illustrating a process of forming electrode plates by pressure carburization.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

### Embodiment 1

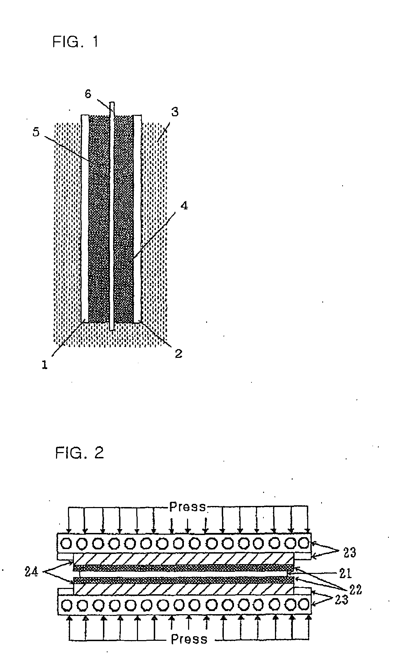

The structure of a battery having an electrode plate according to a first embodiment of the invention will now be described. Referring to FIG. 1, in the battery of the invention, when a cathode and an anode are connected through an electrolyte 3 which has an oxidizing agent and a reducing agent facing each other therein as a cathode active material 1 and an anode active material 2, respectively, reduction occurs at the cathode and oxidation occurs at the anode, so that electrons flow from the anode to the cathode through an outer load (not shown), and thus current flows from the cathode to the anode.

Copper is used for the cathode, and the anode active material 2 is constructed by a material selected from aluminum, zinc and magnesium. The electrolyte 3 comprises a 1 ~ 8 N aqueous potassium hydroxide (KOH) solution, and a 1 ~ 12 N aqueous sodium hydroxide (NaOH) solution. Typically, a higher concentration is preferable.

In particular, a reduction system of the anode active material may comprise an oxidizing agent such as aluminum oxide, manganese oxide and silicon oxide or a reducing agent such as cobalt chloride and barium chloride. Although only the oxides can be used therefore, the reduction system may comprise a mixture of the oxides and the chlorides. Specifically, the reduction system preferably comprises a suitable mixture of 50 ~100 parts of aluminum oxide, 1 ~25 parts of barium chloride, 1 ~25 parts of manganese oxide, 25 ~ 50 parts of silicon oxide, and 1 ~25 parts of cobalt chloride. Meanwhile, the electrolyte may further comprise powders of aluminum, zinc, or magnesium which become the anode active material.

The anode and the cathode are equipped with an electron donor 4 and an electron acceptor 5, respectively. The electron donor 4 is manufactured by doping, for example, zirconium, which is one of the rare earth metal, to a carbon material or a conductive polymeric material through thermal gas carburization at a temperature of 500 - 1,000 °C for 0.5 ~ 1 hour in a vacuum furnace.

Most preferably, the electron donor 4 and the electron acceptor 5 have a ZrO₂ doping layer and a ZrSiO₄ doping layer formed in parallel on a carbon fiber body. The doping layers are disposed in such a manner of cathode/ZrO₂/ZrSiO₄/separator/ZrSiO₄/ZrO₂/anode so as to allow the ZrSiO₄ doping layers to be located near the separator, in which the ZrO₂ doping layers and the ZrSiO₄ doping layers are formed on the carbon fiber body.

Meanwhile, a porous separator 6 is provided between the electron donor 4 and the electron acceptor 5, and is constructed of a material selected from polyethylene, polypyrrole and polyolefin.

In the battery of the invention, the electron donor 4 is equipped to the anode where the oxidation, that is, an electron discharging reaction, occurs, and the electron acceptor 5 is equipped to the cathode where the reduction, that is, an electron receiving reaction, occurs, so that an ability of supplying the electrons can be increased, whereby the battery has an enhanced life span.

Carbon is adsorbed into the surface of a copper plate of the cathode of the battery by thermal gas carburization. That is, carbon is integrated to the surface structure of the copper plate of the cathode by thermal gas carburization, so that the copper plate has a substantially increased surface area due to carbon adsorbed in a three-dimensional shape to the surface of the copper plate of the cathode. Accordingly, the copper plate has remarkably increased charge holding capabilities, thereby increasing the life span while enhancing an output voltage of the battery in comparison to the conventional battery.

Additionally, according to the invention, in comparison to the case where a carbon material is attached to the copper plate with a binder, it is possible to avoid an adverse influence of lowering the output voltage of the battery due to impurities of the binder and to remarkably enhance a bonding force of carbon and the surface structure of the copper plate through thermal gas carburization, thereby remarkably increasing the output characteristics of the battery.

As described above, the electrode plate of the battery of the invention is manufactured by diffusing carbon into the surface of the electrode plate through thermal gas carburization. More specifically, after the electrode plate constructed of, for example, a copper plate or a carbon bar to be treated is loaded into a firing furnace, a carbon containing gas such as carbon dioxide (CO₂), acetylene (C₂H₂), butane (C₄H₁₀), and ethanol (C₂H₅OH) is introduced into the firing furnace in a vacuum state, and the firing furnace is sealed. Then, the electrode plate is fired within the furnace through thermal gas carburization, so that the surface of the electrode plate is coated with carbon crystals.

In particular, when thermal gas carburization is performed using butane (C₄H₁₀) or ethanol (C₂H₅OH), the electrode plate can have an extended life span. Alternatively, when thermal gas carburization is performed using carbon dioxide (CO₂) or acetylene (C₂H₂), the battery can provide a higher output voltage.

The process of thermal gas carburization for the electrode plate will be described as follows. First, a firing furnace is prepared, and an electrode plate constructed of a first metallic material is then provided to the firing furnace. Then, while setting firing conditions such as pressure, time, temperature within the firing furnace, the electrode plate of the first metallic material is fired at a high temperature less than the melting point of the first metallic material and higher than the melting point of a second metallic material constituting an anode within the firing furnace filled with a carburizing gas of 0.05 pm in a vacuum (0.1 mp), such that aluminum and carbon or one of aluminum and carbon are diffused into the electrode plate at high temperature. Finally, after carbon and aluminum are diffused into the electrode plate, and the temperature of the furnace is decreased to room temperature, the fired electrode plate is removed from the furnace.

Although carbon and aluminum are used in manufacturing the electrode plate of the first metallic material through thermal gas carburization in the above process, it should be noted that only carbon may be used for manufacturing the electrode plate.

### Embodiment 2

An electrode plate formed through pressure carburization according a second embodiment will be described as follows. FIG. 2 is a diagram illustrating a process of forming the electrode plate according to the second embodiment.

Since aluminum, zinc or magnesium provided as the second metallic material for an electrode plate of the anode creates a strong oxide coat, it is difficult to diffuse carbon into the surface of the electrode plate through thermal gas carburization. Accordingly, conventionally, a charge donor such as a carbon material is attached to the metallic surface of the electrode plate using a binder, but since the binder is fitted into a surface cavity on the charge donor such as the carbon material, there is a problem of decreasing the surface area of the carbon material necessary for a charge layer.

In order to solve the problem as described above, according to the present embodiment, the large-area charge layer necessary for the electrode is formed in such a manner of heating a metal plate 24 to the melting point or more of the metal plate 24, and attaching carbon materials 22 serving as the charge donor onto both sides of an electrode plate 21 by compressing the carbon materials 22 using thermally resistant ceramic materials 23.

In particular, it is necessary to rapidly decrease heating temperature in order to securely fix the carbon materials 22 into both sides of the electrode plate 21. However, with thermal gas carburization as with the first embodiment, rapid cooling cannot be performed due to the vacuum condition of the firing furnace. On the contrary, according to the present embodiment, rapid cooling can be performed more stably through pressure carburization, thereby allowing large-scale production of the electrode plates with lower manufacturing costs.

### Example

Output voltages of the battery according to the invention were detected using samples of the battery according to the invention and the conventional battery. In order to manufacture the battery samples, copper electrode plates (20 mm x 50 mm x 0.02 mm) were subjected to thermal gas carburization under the conditions in which one of carbon dioxide (CO₂), acetylene (C₂H₂), butane (C₄H₁₀) and ethanol (C₂H₅OH) was used as a carbon containing gas, such that the steel surface of the electrode plates was coated with carbon crystals. The carburized copper electrode plates were used for a cathode of the battery samples, and typical aluminum material were used for an anode of the battery samples. Additionally, a fan of 25 mA was used as a load. After forming a zeolite layer on the electrode plates, the electrode plates were carburized by firing at a temperature of 200 ~ 300 °C in a vacuum furnace. 100 parts of aluminum oxide, 40 parts of silicon oxide, 10 parts of manganese oxide, and 10 parts of cobalt chloride were dispersed or dissolved in an 8 N aqueous potassium hydroxide (KOH) solution.

Carburization was performed on the electrode plates using one of acetylene (C₂H₂), carbon dioxide (CO₂), butane (C₄H₁₀) and ethanol (C₂H₅OH). Output voltages of the battery samples according to the invention were compared with that of the battery sample including a copper electrode plate which was not subjected to carburization.

The battery samples including the carburized copper electrode plates as the cathode exhibited excellent output voltage compared with the battery sample including the copper electrode plate which was not subjected to carburization. In particular, when using ethanol (C₂H₅OH) for carburization, the output voltage was excellent compared with other cases.

In terms of output currents of the battery samples according to time, the battery samples including the carburized copper electrode plates as the cathode provided an excellent output current when compared with the battery sample including the copper electrode plate which was not subjected to carburization. Additionally, the output currents of the battery samples were gradually increased in sequence of acetylene (C₂H₂), carbon dioxide (CO₂), butane (C₄H₁₀) and ethanol (C₂H₅OH), which were used for carburization of the electrode plates. In particular, when using ethanol (C₂H₅OH) and butane (C₄H₁₀) for carburization, the output voltages were excellent when compared with other cases.

As apparent from the above description, according to the present invention, since the battery has self-recharging capabilities, it has stable output characteristics as well as a remarkably increased life span, and thus can be used for various applications.

Additionally, according to the present invention, the oxidized anode active material can be reduced within an electrolyte, thereby allowing the electrode reaction to be maintained. The anode active material can be recycled, thereby increasing the life span of the battery. Additionally, the battery of the invention has an ability to supply the electrons increased in proportion to the surface area of the electrode plate, thereby exhibiting a remarkably increased output voltage in comparison to conventional batteries.

It will be apparent to those skilled in the art that various modifications and variations can be made in the present invention without departing from the spirit or scope of the inventions.

Thus, it is intended that the present invention covers the modifications and variations of this invention provided they come within the scope of the appended claims and their equivalents.

## Claims

1. A self rechargeable alkaline battery, comprising: a cathode; an anode having an anode active material comprising metal selected from the group consisting of aluminum, zinc and magnesium; a separator formed between the cathode and the anode; and an alkaline electrolyte comprising one of alkali metal, alkaline earth metal and alkaline earth metal hydroxides, and having an oxidizing agent and a reducing agent dispersed therein, wherein an oxidized anode active material is reduced within the electrolyte.

2. A self rechargeable alkaline battery, comprising: a cathode; an anode having an anode active material comprising metal selected from the group consisting of aluminum, zinc and magnesium; a separator formed between the cathode and the anode; an alkaline electrolyte comprising one of alkali metal, alkaline earth metal and alkaline earth metal hydroxides, and having an oxidizing agent and an reducing agent dispersed therein; an electrode receptor equipped between the cathode and the separator; and an electrode donor equipped between the anode and the separator.

3. The battery according to claim 1, wherein the electrolyte comprises at least one selected from the group consisting of aluminum oxide, manganese oxide, and silicon oxide.

4. The battery according to claim 2, wherein the electrolyte comprises at least one selected from the group consisting of cobalt chloride and barium chloride.

5. The battery according to claim 1 or 2, wherein the cathode is constructed of copper.

6. The battery according to claim 1 or 2, wherein the electrode receptor or the electrode donor is equipped between the cathode or the anode and the separator, and the electrode receptor or the electrode donor is formed by doping an electrode catalyst selected from rare earth metal, rare earth-based oxides and cobalt-based oxides to a matrix constructed of a carbon material or a conductive polymeric material.

7. The battery according to claim 2, wherein the electrode receptor and the electrode donor are formed of a conductive matrix comprising at least one selected from zirconium oxide and zirconium silicates.

8. The battery according to claim 1 or 2, wherein the cathode is subjected to surface carburization.

9. The battery according to claim 1 or 2, wherein the cathode has a layer formed on a surface of the cathode by doping carbon to zeolite.

10. The battery according to claim 1 or 2, wherein the electrolyte contains KOH or NaOH in a liquid state or a gel state, and comprises metallic powders or wired rods formed of one selected from the group consisting of aluminum, zinc, and magnesium.

11. The battery according to claim 1 or 2, wherein the separator is a porous separator constructed of a material selected from polyethylene, polypyrrole and polyolefin.
